# EUROPEAN PATENT SPECIFICATION

(11) **EP 3 502 205 B1**
(45) Date of publication and mention of the grant of the patent: **29.07.2020**
(21) Application number: 17210394.7
(22) Date of filing: 22.12.2017
(51) Int. Cl.: C09J 131/04, C08F 261/04, C08K 3/16, C08F 218/08, C09J 151/00

(54) **SILANE MODIFIED WOOD ADHESIVE WITH IMPROVED STABILITY**
SILANMODIFIZIERTER HOLZKLEBER MIT VERBESSERTER STABILITÄT
ADHÉSIF DE BOIS MODIFIÉ AU SILANE PRÉSENTANT UNE STABILITÉ AMÉLIORÉE

(43) Date of publication of application: 26.06.2019
(73) Proprietor: Organik Kimya Sanayi Ve Tic. A.S., 34075 Istanbul (TR)
(72) Inventor: Basak Ergun Ersen, Nur, Kemerburgaz Eyüpsultan Istanbul (TR); Altinok, Sibel, Kemerburgaz Eyüpsultan Istanbul (TR); Perez Lorenzo, Guillermo, Kemerburgaz Eyüpsultan Istanbul (TR); Uzun, Mustafa, Kemerburgaz Eyüpsultan Istanbul (TR)

(56) References cited:
- WO-A1-2013/057214
- US-A1- 2014 350 172

## Description

The present invention relates to a vinyl ester latex adhesive composition with improved stability and tensile adhesion at elevated temperatures, produced by the delayed addition of silane compounds. The present invention also relates to a process for producing such a vinyl ester latex adhesive and it's use as a D3 type wood adhesive in the furniture industry.

Adhesives are used in smaller amounts to assemble building materials in residential and industrial construction. However, significant amounts are used in non-structural applications such as doors, windows and frames. Adhesives can excellently transfer and radiate stresses, thereby increasing the strength and stiffness of the materials. Effective transfer of stress from one substance to another depends on the strength of the links between the substances.

Wood chemically can be considered to be a blend of primarily cellulose and lignin, which are the most abundant organic substances in the world. Cellulose is a polysaccaride and lignin is an amorphous polyphenolic substance which does not have a regular pattern in its structure. Lignin can be described as a mixture of heterogeneous substances and it improves the properties of wood such as stiffness and strength. Besides these primary substances other components are also present and each of these contribute to fiber properties which effect the properties of final wood based material.

Mechanical connections is probably the primary mechanism by which adhesives adhere to porous structures such as wood. The most durable structural bonds to wood are believed to develop not only when an adhesive penetrates deeply into the spaces of wood surface, but also when an adhesive diffuses into cell walls to make molecular level contact with the cellulosic molecules which are one of the primary substances in wooden materials. If the adhesive molecules penetrate deeply enough into cellulosic molecules and react with that substance, the strength of the bond can be expected to exceed the strength of the wood molecules itself. Functional monomers are used in order to increase the bonding capability of the adhesives with wood in such a way that the adhesive molecules penetrate deeply enough into the cellulosic molecules. One of these functional monomers are silane coupling agents that provide advantageous features, such as providing crosslinking with the substance, adhesive bonding, maximizing composite strength, increasing mechanical properties. Reactive groups of silane modified adhesives react with the hydroxyl groups of cellulose which make the penetration of adhesive molecules into wood molecules easier and this is believed to contribute to the bonding capability of adhesives. However, due to the high condensation activity of the silanol groups, these substances adversely effect the stability of the product.

In all applications of adhesives, improving the performance of a binder is of extensive interest. However most of the time a change in order to improve one property, results with an adverse effect in other properties of the adhesive composition. Therefore it is also very important not to adversely effect other properties while improving the desired property. As mentioned before, this is a problem also for wood adhesives when silane is used for improving the performance of the adhesive because on the other hand silane decreases the stability of the product. Given this problem, it is an object of the present invention to provide a silane modified D3 type wood adhesive with improved stability.

When variety of adhesives, types of materials, thermal and humidity effects are considered, different methods have been developed in order to evaluate the quality of these products and wood adhesives are classified based on the results of these tests. EN 204 is the European standard for the classification of thermoplastic wood adhesives for non-structural applications. This standard gives a common classification with respect to the durability classes for wood adhesives so that specific properties are guaranteed by the adhesive manufacturer based on the type of wood adhesive. The durability classes are determined to be D1, D2, D3 and D4 by EN 204, each class explained as below:
D1: Interior, in which the moisture content of the wood does not exceed 15 %
D2: Interior with occasional short-term exposure to running or condensed water and/or to occasional high humidity provided the moisture content of the wood does not exceed 18%
D3: Interior with frequent short-term exposure to running or condensed water and/or to heavy exposure to high humidity. Exterior not exposed to weather.
D4: Interior with frequent long-term exposure to running or condensed water. Exterior exposed to weather but with protection by an adequate surface coating.

Based on EN 204, D3 type wood adhesives are for non-structural applications. These are suitable for interior use in which they are exposed to running or condensed water in a frequent short-term basis and/or heavily exposed to high humidity.

One of the application areas of D3 type wood adhesives is the lap joints which actually are simplest options for joining pieces to make a bigger structure. A notch cut out of one board and a notch cut out from another are overlapped and sticked together by applying a wood adhesive. For the D3 type wood adhesives of EN 204 Classification, tensile adhesion of lap joints at elevated temperatures is a desired property. However, in order to achieve this object and reach the desired tensile adhesion at high temperatures, a variety of functional monomers are added, which in return increase the cost of the product. As mentioned in EP 0035332 typical unsaturated organo-silicon monomers y-methacryloxypropyl trimethoxy silane, vinyl triethoxy silane and vinyl trimethoxy silane are rather expensive and it is disclosed that it's possible in emulsion polymerization to use only very low quantities, (from 0.1-1.0% by weight of unsaturated organo-silicon monomers), and be effective in promoting water resistant adhesion.

In the prior art in general, silanes are often used as functional monomers which are added as adhesion promoters in order to reach the desired tensile adhesion. However, silanes in return decrease the stability of the product as also mentioned in US 2011/201727 B2 which discloses silane modified additives in order to solve the storage stability of compositions both in aqueous and solid form even at high silane contents. It is stated that "In aqueous polymer compositions, organosilicon compounds tend to separate from the aqueous phase and undergo an uncontrolled self-condensation so that an increase in the viscosity or even gelling occur. However, even if polymer compositions containing organosilicon compounds are present in solid form, an uncontrolled self-condensation of the organosilicon compounds occurs in the presence of residual moisture or because of atmospheric humidity, so that corresponding polymer compositions can no longer be completely taken up in water. The problems described occur in particular in polymer compositions having high contents of organosilicon compounds." It is disclosed that phase separation or an uncontrolled condensation of the silane is absent owing to the presence of the amount of water soluble polymers and as a result of the mixing. So the presence of water soluble polymers and mixing are addressed as the solutions to the stability problem.

EP 0943634A1 discloses a silicone resin-containing emulsion composition obtained by emulsion polymerization of a mixture containing (A) a silanol group-bearing silicone resin and (B) a radical-polymerizable vinyl monomer. It is mentioned that silicone resins resulting from hydrolytic condensation of silane compounds are advantageous as a coating since they are able to form films having a high hardness and satisfactory weather resistance, water resistance, heat resistance and water repellency.The problem with silicone resin containing emulsion compositions is also mentioned, as the drawbacks of poor film-forming ability, alkali resistance, flexibility, and shelf stability due to the high condensation activity of silanol groups. However no intention to solve this by the delayed addition of silane compounds is disclosed.

WO 2013/057214 A1 discloses formulation of a non-structural thermoplastic wood adhesive with water resistance greater than 3 N/mm2, heat resistance greater than 7 N/mm2, creep resistance more than 21 days and shelf life more than 6 months. However the formulation of the wood adhesive includes a polyvinyl alcohol with a high degree of hydrolysis, prefarably modified with ethylene.These specific type of ethylene modified vinyl alcohol polymers increase the cost of the formulation but besides the cost, using an ethylene modified type of polyvinyl alcohol different than commonly used types bears practical problems such as storage in industrial scale productions: If a special type of polyvinyl alcohol is required in the production then there should be a dedicated storage tank for this type of polyvinyl alcohol however if the production capacity does not justify investing for a storage tank then it will be stored in barrels or IBCs and will be fed into the reactor by manual operations. This will bring safety, health and envrionment risks into the process, besides the quality risks of manual operations.

US Patent 3,932,335 discloses adhesive compositions based on vinyl ester polymer dispersions. For providing the desired shelf life stability of the product, water-miscible alcohol having 1-3 Carbon atoms selected from the group consisting of methanol, ethylene glycol, propylene glycol, ethanol, isopropanol and n-propanol. Methanol or ethylene glycol were added optionally as a blend with glyoxal, to the emulsion polymer. The stability that was achieved with these post additions was not enough as the results with very high viscosities in ageing tests show.

EP 0561221 A1 discloses PvOH-stabilized aqueous emulsions containing a vinyl acetate-N-methylolacrylamide copolymer and tetramethylol glycoluril (TMGU) demonstrating an improved combination properties as an RF curable (bonding with radio frequency heating) Type-1 wood adhesive. It is mentioned that the Vac/NMA copolymer emulsions have low grit values and excellent viscosity stability and good catalyzed pot life. However, the stability of these products are again not adequate for all wood applications. When TMGU is used compatible with the teaching of the present invention a high amount of viscosity change generated during the ageing tests indicate the stability to be not as good.

EP 0686682 B1 relates to aqueous dispersion adhesives having pH value of from 2 to 6 that comprise homo- or copolymeric polyvinyl esters, polymeric protective colloids, water-soluble compounds which can be complexed with polymeric protective colloids, and at least partially masked polyaldehydes having at least 3 C atoms. However the pot life of these polymers are as short as to be mentioned in hours as disclosed in the examples.

EP 0 035 332 B1 discloses an aqueous emulsion polymer composition for use as a ceramic tile adhesive wherein the composition is prepared in the presence of at least one unsaturated organosilicon monomer such as y-methacryloxypropyl trimethoxy silane, vinyl triethoxy silane and vinyl trimethoxy silane. In example 1 of the disclosure 2 different emulsions are prepared and y-methacryloxypropyl trimethoxy silane is included in the 2nd emulsion feed. So the silane compound has been added into the polymerization medium after the addition of first main monomer emulsion comprising styrene, ethyl acrylate and acrylic acid is completed. However the effect of delayed addition is not mentioned and it is not clear if the solution is based on delayed addition of silane compound. Additionally the silane compound is present in an emulsion where vinyl acetate is not present and the resulting adhesive is used as a tile adhesive which is a different application.

EP 0 640 630 B1 (DE 4 329 090) discloses silicon modified aqueous plastic dispersions for the production of adhesive compositions with improved wet adhesion.The silicon modified plastic dispersions are prepared by a process in which the addition of the vinyl silane (suitable silanes are mentioned as vinyltrimethoxysilane, vinyltriethoxysilane, vinyltriacetoxysilane, vinyl tert-butoxydiethoxysilane, methylvinyldiethoxysilane) takes place during the entire feed time of the other monomers or in the initial phase of the polymerization between 0-40 % conversion of the total monomers. It is mentioned that if an influence on the particle formation is to be excluded, the addition of silane dissolved in a part of the monomers, should be made in 60-180 minutes, after 10 to 20 minutes of the start of polymerization. The timing of silane addition is important in this disclosure, too. However it is either fed in parallel with the entire monomer feed or only in the initial phase of the polymerization.

WO 2013/057214 A1 discloses a wood adhesive resistant to humidity produced by polymerization of vinyl acetate in the presence of a polymer of polyvinylalcohol (PVOH), adding a glutaldehyde based cross-linker and AlCl3 however does not use any silane.

US 2014/350172 A1 discloses vinyl ester-ethylene/acrylic multistage emulsions for use in paints and plasters, comprising vinyl silane which is added before all or most of the vinyl acetate has been added.

The object of the present invention is, to increase the stability of the wood adhesive product even though it contains a silane monomer by arranging the addition timing of said silane monomer so that it is added to the reaction medium, only after a certain amount of the monomer has already been fed into the reactor.

Said object is achieved by a vinyl ester latex adhesive composition comprising, based on the total amount of monomers,
a. from 50 to 99% by weight of vinyl esters of C2-C12-carboxylic acids and from 0,05 to 5% by weight of vinyl silanes capable of copolymerizing with the said vinyl esters, added after at least 50% of the vinyl esters of C2-C12-carboxylic acids has been fed into the reaction medium,
b. from 0,5% to 15% by weight of polyvinyl alcohol with a degree of hydrolysis of between 90% and 99%,
c. from 0,25% to 10% by weight of polyvinyl alcohol with a degree of hydrolysis of between 70 and 90%,
d. from 0,05% to 5% by weight of at least one crosslinking agent,
e. from 1% to 20% by weight of at least one Lewis acid metal salt,
f. optionally from 0,15% to 15% of a coalescing agent to reach the desired minimum film formation temperature. The amount of coalescing agent is determined based on the application, in order to adjust the minimum film formation temperature to the desired level for the intended application.

It has been surprisingly found out that, when polymerizable silane is added only through the end of the monomer feed, at least after 50%, preferably %70 or most preferably after 90% by weight of the total amount of vinyl esters of C2-C12 carboxylic acids has been fed into the reaction medium, the shelf life stability of the polymer is improved while also maintaining the heat resistance.

The resultant latex adhesive was tested according to EN 205 and found suitable to be classified as a D3 type wood adhesive according to EN 204. The resultant polymer was also tested according to EN-14257 (WATT 91, determination of tensile strength of lap joints at elevated temperature) and the tensile adhesion at elevated temperature was found to be above 7 N/mm2.

In a preferred embodiment of the present invention, vinyl esters of C2-C12-carboxylic acids are vinyl acetate, vinyl propionate, vinyl butyrate, vinyl laurate, vinyl 2-ethylhexanoate, 1-methylvinyl acetate and vinyl pivalate; particular preference is given to vinyl acetate.

In a further preferred embodiment of the present invention, vinyl silanes are added only after 70%, more preferably after 85% and most preferably after 90% addition of the vinyl esters of C2-C12-carboxylic acids to the reaction medium have already been completed. The vinyl silane feed continues until the end of vinyl esters of C2-C12 carboxylic acids addition. Ethylenically unsaturated silane compounds that can be used are vinyl tri(alkoxy)silanes, where the alkoxy groups may be methoxy, ethoxy, methoxyethylene, ethoxyethylene. Prefferred ethylenically unsaturated silane compound is vinyl trimethoxy silane.

In a different embodiment of the present invention vinyl silane addition is made by a so called shot addition in less than 5 minutes, where it is added at least after 50%, preferably %70 or more preferably after 90% by weight of the total amount of vinyl esters of C2-C12 carboxylic acids has been fed into the reaction medium.

Most of the time the reaction is not completely over right after the monomer addition. Therefore after monomer addition is completed -in the cooking stage of the process-the reactor contents are kept close to the reaction temperature for a period of time in order to let the unreacted monomers to polymerize by themselves. In a further embodiment of the present invention vinyl silane addition continues after the end of vinyl esters of C2-C12 carboxylic acids addition, in a part or throughout the entire period of the cooking stage.

After the cooking stage some unreacted monomers are still present. In order to prevent the final product to have a free monomer content, monomer reduction should be carried out so that all or most of the unreacted monomers left after the cooking stage are polymerized. Different methods can be used for monomer reduction. According to the present invention, in different embodiments the vinyl silanes may be added with different timings after at least 50% by weight of the total amount of vinyl esters of C2-C12 carboxylic acids has been fed into the reaction medium, but it cannot be added before 50%. Besides, in different embodiments of the present invention the vinyl silane addition may continue after the vinyl esters of C2-C12 carboxylic acids addition is completed, but it cannot continue when the monomer reduction stage is reached. Similarly the vinyl silane addition cannot be made after, neither the start nor the end of the monomer reduction stage.

As dispersants, it is possible to use all kinds of emulsifiers employed in emulsion polymerization. To stabilize the dispersion, it is possible to use either protective colloids or emulsifiers or combinations of both of these two substances. Suitable protective colloids are, polyvinyl alcohols, polyethylene glycol, polyvinylpyrrolidone, celluloses such as hydroxyethyl cellulose, hydroxypropylcellulose and carboxymethyl cellulose, starches and dextrins, cyclodextrins, homopolymers or copolymers of acrylamidopropanesulfonic acid.

Polyvinyl alcohols are obtained with the hydrolysis reaction of vinyl acetate monomer and are classified according to the hydrolysis level and their viscosities. Only one type of polyvinyl alcohol with a hydrolysis degree of between 70% and 99% may be used, in an amount of from 0,75% to 25% by weight based on the total amount of monomers. However it is preferred to use a combination of at least 2 types of polyvinyl alcohols with differing hydrolysis degrees. When using a blend of 2 different types of polyvinyl alcohols the amount and hydrolysis degrees should be selected from the ranges specified as below:
Polyvinyl alcohols with the hydrolysis degree of 90% to 99% are used in an amount of from 0,5% to 15%, more preferably from 3% to 14% and the most preferably from 5% to 10% based on the total monomers.

Polyvinyl alcohols with the hydrolysis level of 70% to 89% are used in an amount of from 0,25% to 10%, more preferably from 0,5% to 5% and the most preferably from 0,6% to 3% based on the total monomers.

In a preferred embodiment of the present invention the ratio of the amount of PVOH with the higher degree of hydrolysis to the lower degree of hydrolysis is 10 to 15.

The selected PVOH compounds can be mixed before being transferred into the reaction medium or can be mixed in the reaction medium after being fed one after the other, in order to make the blend.

Suitable emulsifiers can be all commercial ionic and non-ionic emulsifiers. Particularly, preferred examples are; ethoxylated fatty alcohols and also alkali metal and ammonium salts of long-chain alkyl sulfates (C8-C12-alkyl radical), of sulfuric monoesters of ethoxylated alkanols and ethoxylated alkylphenols of alkyl acids and of alkylaryl sulfonic acids.

Acidic metal salt compounds or salts or acids of oxo anions are used so that they can form complexes or coordinate bonds with the protective colloids namely polyvinyl alcohol compounds. These are selected from the group of compounds comprising aluminium chloride, aluminium nitrate, titanium sulfate, zirconium oxychloride, phosphoric acid and boric acid. These acidic salts containing polyvalent cation complexable by polyvinyl alcohol are added at the end of the polymerization reaction.

Preferably AlCl3.6H2O can be used as a Lewis acid metal salt from 1% to 20% based on the total amount of monomers.

Monomer units having a crosslinking reaction are preferably used in an amount of from 0,001% to 10% by weight, more preferably from 0,05% to 5% by weight and most preferably from 0,1% to 3% by weight based on the total amount of monomers. Examples are N-metylol acrylamide, N-methylolmethacrylamide, N-(alkoxymethyl)acrylamides or N-(alkoxymethyl)methacrylamides containing a C1-C6-alkyl radical, e.g. N-isobuthoxymethyl)acrylamide (IBMA), N-(isobutoxymethyl)methacrylamide (IBMMA), N-(n-butoxymethyl)acrylamide (NBMA), N-(n-butoxymethyl)methacrylamide (NBMMA); multiple ethylenically unsaturated comonomers such as ethylene glycol diacrylate, 1,3- butylene glycol diacrylate, 1,4-butylene glycol diacrylate, propylene glycol diacrylate, divinyl adipate, divinyl benzene, vinyl methacrylate, vinyl acrylate, allyl methacrylate, allyl acrylate, diallyl maleate, diallyl phthalate, diallyl fumarate, methylenebisacrylamide, cyclopentadienyl acrylate or triallyl cyanurate. Particular preference is given to n-methylol acrylamide.

The polymerization reaction of the vinyl ester based emulsion polymer is preferably carried out in a temperature range of from 40°C to 100°C and is initiated by means of water-soluble free-radical initiators used for emulsion polymerization. These are the known organic and inorganic preoxides such as alkali metal peroxo-disulfates, hydrogene peroxide, tert-butyl hydrogene peroxide or organic azo compounds. These known compounds are preferably used in combination with reducing agents such as the sodium salt of hydroxymethanesulfinic acid, ascorbic acid, sodium sulphite, sodium bisulfite, sodium sulfoxylate derivatives. In addition, it is possible to use metal compounds in which the metal can be present in various oxidation states, e.g. iron(II)sulfate.

It may be necessary to add coalescing agents depending on the glass transition temperature of the polymer to reach the minimum film formation temperature of ≤ 0 °C.

Example to these coalescing agents are propylene glycol, polyethylene glycol, butyl carbitol acetate, mixtures of mono- and bi-carboxylic acid esters. According to technical practice, as the coalescent increases, the tensile adhesion strength of the polymer at elevated temperature (WATT 91) decreases. To be on the safe side, the coalescing agents were added in an amount of from 4% to 5% based on the total amount of monomers.

### EXAMPLES

### Inventive Example 1

395 parts of deionized water, 39,50 parts of polyvinyl alcohol (30/92) (a/b; a is viscosity in mPa.s and b is the hydrolysis degree of the PVOH) and 3,10 parts of polyvinyl alcohol (4/88) were added to a 3-necked flask equipped with a stirrer, thermometer and reflux condenser. The flask was heated to 90°C and the polyvinyl alcohols were dissolved completely. The flask was then cooled down to 65°C and 3,7 parts of disodium ethoxylated alcohol (C10-12) half ester of sulfosuccinic acid was added. At 65°C, 52 parts of vinyl acetate, 0,026 parts of tert-butyl hydrogen peroxide dissolved in 0,63 parts of deionized water and 0,029 parts of sodium sulfoxylate, 0,029 parts of sodium bicarbonate dissolved in 0,68 parts of water were added to reactor. The reactor temperature was increased gradually from 65°C to 72°C. After the reaction temperature was stabilized, feeding of 461 parts of vinyl acetate started in parallel to 0,17 parts of tert-butyl hydrogene peroxide dissolved in 24,3 parts of water and 0,17 parts of sodium sulfoxylate and 0,17 parts of sodium bicarbonate dissolved in 24,3 parts of deionized water. After 15 minutes, feeding of 15,8 parts of N-methylol acrylamide (25%) started in parallel. After 90% of vinyl acetate has been fed (414,90 parts), feeding of 1 part of vinyl trimethoxysilane started and continued in parallel with the remaining 10% of the vinyl acetate feed (46,10 parts).

The feeding of vinyl acetate was 3 hours in total, in parallel with the t-BHP and sodium sulfoxylate, sodium bicarbonate solution. The feeding time of N-methylol acrylamide (as a 25% solution of water) was 2 hours. The reactor was heated to 90°C and kept close to this temperature for 15 minutes. Then the reactor temperature was decreased to 65°C and at this temperature 0,59 parts of t-BHP dissolved in 7,9 parts of deionized water was introduced. After that, 0,59 parts of sodium sulfoxylate dissolved in 7,9 parts of deionized water was added to the flask. The temperature was decreased to 40°C and at this temperature 21,7 parts of butyl carbitol acetate was added. Then, 37,28 parts of AlCl3.6H2O dissolved in 37,3 parts of water was introduced. The final latex polymer has a solid content of 49,8%, pH:2,5, viscosity: 7500 cps (6/20).

### Inventive Example 2

395 parts of deionized water, 39,50 parts of polyvinyl alcohol (30/92) and 3,10 parts of polyvinyl alcohol (4/88) were added to a 3-necked flask equipped with a stirrer, thermometer and reflux condenser. The flask was heated to 90°C and the polyvinyl alcohols were dissolved completely. The flask was then cooled down to 65°C and 3,7 parts of disodium ethoxylated alcohol (C10-12) half ester of sulfosuccinic acid was added. At 65°C, 52 parts of vinyl acetate, 0,026 parts of tert-butyl hydrogene peroxide dissolved in 0,63 parts of deionized water and 0,029 parts of sodium sulfoxylate, 0,029 parts of sodium bicarbonate dissolved in 0,68 parts of water were added to reactor. The reactor temperature was increased gradually from 65°C to 72°C. After the reaction temperature was stabilized, feeding of 461 parts of vinyl acetate was started in parallel to 0,17 parts of tert-butyl hydrogene peroxide dissolved in 24,3 parts of water and 0,17 parts of sodium sulfoxylate and 0,17 parts of sodium bicarbonate dissolved in 24,3 parts of deionized water. After 15 minutes, feeding of 15,8 parts of N-methylol acrylamide (as a 25% solution of water) started in parallel. After 90% of vinyl acetate has been fed (414,90 parts), feeding of 1 part of vinyl trimethoxysilane started and continued in parallel with the remaining 10% of the vinyl acetate (46,10 parts).

The feeding of vinyl acetate was 3 hours in total, in parallel with the t-BHP and Sodium sulfoxylate, sodium bicarbonate solution. The feeding of N-methylol acrylamide (25%) was 2 hours. The reactor was heated to 90°C and kept close to this temperature for 15 minutes. Then the reactor temperature was decreased to 65°C and at this temperature 0,59 parts of t-BHP dissolved in 7,9 parts of deionized water was introduced. After that, 0,59 parts of sodium sulfoxylate dissolved in 7,9 parts of deionized water was added to the flask. The temperature was decreased to 40°C and at this temperature 18,6 parts of butyl carbitol acetate and 5,15 parts of butyl diglycol were added. Then, 24,85 parts of AlCl3.6H2O dissolved in 24,9 parts of water was introduced. The final latex polymer has a solid content of 49,3%, pH:2,4, viscosity: 9800 cps (6/20).

### Comparative example 1

395 parts of deionized water, 39,50 parts of polyvinyl alcohol (30/92) and 3,10 parts of polyvinyl alcohol (4/88) were added to a 3-necked flask equipped with a stirrer, thermometer and reflux condenser. The flask was heated to 90°C and the polyvinyl alcohols were dissolved completely. The flask was then cooled down to 65°C and 3,7 parts of disodium ethoxylated alcohol (C10-12) half ester of sulfosuccinic acid was added. At 65°C, 52 parts of vinyl acetate, 0,026 parts of tert-butyl hydrogene peroxide dissolved in 0,63 parts of deionized water and 0,029 parts of sodium sulfoxylate, 0,029 parts of sodium bicarbonate dissolved in 0,68 parts of water were added to reactor. The reactor temperature was increased gradually from 65°C to 72°C. After the reaction temperature was stabilized, feeding of 461 parts of vinyl acetate and 1 part of vinyl trimethoxysilane were started in parallel to 0,17 parts of tert-butyl hydrogene peroxide dissolved in 24,3 parts of water and 0,17 parts of sodium sulfoxylate and 0,17 parts of sodium bicarbonate dissolved in 24,3 parts of deionized water. After 15 minutes, feeding of 15,8 parts of N-methylol acrylamide (25%) started in parallel.

The feeding of the vinyl acetate and vinyl trimethoxysilane were 3 hours in total, in parallel with the t-BHP and Sodium sulfoxylate, sodium bicarbonate solution. The feeding of N-methylol acrylamide (25%) was 2 hours. The reactor was heated to 90°C and kept close to this temperature for 15 minutes. Then the reactor temperature was decreased to 65°C and at this temperature 0,59 parts of t-BHP dissolved in 7,9 parts of deionized water was introduced. After that, 0,59 parts of sodium sulfoxylate dissolved in 7,9 parts of deionized water was added to the flask. The temperature was decreased to 40°C and at this temperature 21,7 parts of butyl carbitol acetate was added. Then, 37,28 parts of AlCl3.6H2O dissolved in 37,3 parts of water was introduced. The final latex polymer has a solid content of 49,8%, pH:2,5, viscosity: 7300 cps (6/20).

### Comparative example 2

395 parts of deionized water, 39,50 parts of polyvinyl alcohol (30/92) and 3,10 parts of polyvinyl alcohol (4/88) were added to a 3-necked flask equipped with a stirrer, thermometer and reflux condenser. The flask was heated to 90°C and the polyvinyl alcohols were dissolved completely. The flask was then cooled down to 65°C and 3,7 parts of disodium ethoxylated alcohol (C10-12) half ester of sulfosuccinic acid was added. At 65°C, 52 parts of vinyl acetate, 0,026 parts of tert-butyl hydrogene peroxide dissolved in 0,63 parts of deionized water and 0,029 parts of sodium sulfoxylate, 0,029 parts of sodium bicarbonate dissolved in 0,68 parts of water were added to reactor. The reactor temperature was increased gradually from 65°C to 72°C. After the reaction temperature was stabilized, feeding of 461 parts of vinyl acetate and 1 part of vinyl trimethoxysilane started in parallel to 0,17 parts of tert-butyl hydrogene peroxide dissolved in 24,3 parts of water and 0,17 parts of sodium sulfoxylate and 0,17 parts of sodium bicarbonate dissolved in 24,3 parts of deionized water. After 15 minutes, feeding of 15,8 parts of N-methylol acrylamide (as a 25% solution of water) started in parallel.

The feeding of the vinyl acetate and vinyl trimethoxysilane were 3 hours in total, in parallel with the t-BHP and Sodium sulfoxylate, sodium bicarbonate solution. The feeding of N-methylol acrylamide (25%) was 2 hours. The reactor was heated to 90°C and kept around this temperature for 15 minutes. Then the reactor temperature was decreased to 65°C and at this temperature 0,59 parts of t-BHP dissolved in 7,9 parts of deionized water was introduced. After that 0,59 parts of sodium sulfoxylate dissolved in 7,9 parts of deionized water was added to the flask. The temperature was decreased to 40°C and at this temperature 18,6 parts of butyl carbitol acetate and 5,15 parts of butyl diglycol were added. Then, 24,85 parts of AlCl3.6H2O dissolved in 24,9 parts of water was introduced. The final latex polymer has a solid content of 49,8%, pH:2,5, viscosity: 7800 cps (6/20).

### Application Tests of the Inventive and Comparative Examples

### Evaluation of the water resistance

D3-1, D3-3 and D3-4 tests were done for the emulsion polymer latexes based on EN 204 and EN 205. The test specimen preparations were carried out according to EN 205 and the water resistance of the polymer latexes were classified based on EN 204.

The minimum required tensile adhesion strength values were given in Table 1:

**Table 1. Evaluation of D3 type wood adhesives based on EN 204 according to their water resistance**

| EVALUATION OF D3 TYPE WOOD ADHESIVES BASED ON EN 204 ACCORDING TO THEIR WATER RESISTANCE | | |
|---|---|---|
| D3-1 | 7 days at std. ambient cond. | > 10 N/mm² |
| D3-3 | 7 days at std. ambient cond.,4 days in cold water | > 2 N/mm² |
| D3-4 | 7 days at std. ambient cond.,4 days in cold water,7 days at ambient cond. | > 8 N/mm² |

In table 2, it can clearly be seen that, with the delayed addition of vinyl silanes to the reaction medium, the D3-3 test results were improved. As a result, all the adhesives produced in the examples are acceptable as D3 type wood adhesives according to EN 204.

**Table 2. Evaluation of the inventive and comparative examples based on EN 204 according to their water resistance**

| Example # | D3-1 | D3-3 | D3-4 |
|---|---|---|---|
| Inventive example 1 | 13,23 N/mm² | 2,79 N/mm² | 13,23 N/mm² |
| Inventive example 2 | 13,3 N/mm² | 2,8 N/mm² | 13,3 N/mm² |
| Comparative example 1 | 13,1 N/mm² | 2,5 N/mm² | 13,1 N/mm² |
| Comparative example 2 | 13,1 N/mm² | 2,6 N/mm² | 13,1 N/mm² |

### Evaluation of tensile strength of wood glues at elevated temperature

The heat resistance of the polymer latexes were evaluated based on EN 14257:2006 (Table 3):

| **Tensile strength of lap joints at elevated temperature-EN 14257:2006** | |
|---|---|
| Type of adhesive | vinylic mono component |
| Wood type | beech (Faqus Sylvatica) |
| Moisture content of wood | 10±2% |
| Conditioning | 23±2°C and 50±5% relative humidity |
| Surface treatment:before testing | sanding with abrasing paper grit size 100 |
| Number of test specimen | 10 |
| Adhesive layer | thin |
| Gluing area | 200 m2 |
| Testing apparatus | Zwick Universal test machine |
| Testing speed | 50 mm/min |
| Test temperature | 23±2°C |
| Gluing temperature | 20±2°C |
| Coveraqe | 150±10 g/m2 |
| Application of glue | both surfaces |
| Open assembly time | 120±10 s |
| Closed assembly time | 180±10 s |
| Pressure | 0,7/0,8 N/mm2 |
| Pressure time | 120 min |
| Conditioning sequence | 7 day in normal atmosphere (23°C and 50% r.h.), then 60±5 min.in oven at 80±2°C |

When all the patent examples were exposed to tensile adhesion test at high temperatures (WATT91), the inventive example 1 and inventive example 2 had improved results.

**Table 4. Evaluation of tensile strength of wood glues at elevated temperature**

| Example # | EN 14257 test result |
|---|---|
| Inventive example 1 | 7,9 N/mm2 |
| Inventive example 2 | 7,7 N/mm2 |
| Comparative example 1 | 6,9 N/mm2 |
| Comparative example 2 | 6,8 N/mm2 |

According to these results it can clearly be seen that, when vinyl trimethoxy silane was added after 90% of the vinyl acetate has been fed, the tensile adhesion of the polymers at elevated temperature were improved; when it was introduced at the beginning of the feed, the heat resistance of the polymers were lower.

### Stability tests of the polymer latexes

The stability of the emulsion polymers were evaluated at 40°C for 3 weeks and at 60°C for 3 days. Results are showing that, inventive example 1 and inventive example 2 are far better than the comparative examples (Table 5).

**Table 5. Stability test results of the emulsion polymer latexes**

| **Example Code** | **Initial viscosity** | **Viscosity after 3 days @60°C** | **Viscosity after 3 weeks @D40°C** | **Visocsity change @60°C** | **Visocsity change @40°C** |
|---|---|---|---|---|---|
| Inventive example 1 | 7500 cps | 8000 cps | 8050 cps | 6,6% | 7,3% |
| Inventive example 2 | 9800 cps | 9850 cps | 9900 cps | 0,5% | 1,02% |
| Comparative example 1 | 7300 cps | 12000 cps | 12500 cps | 64,38% | 71,23% |
| Comparative example 2 | 7800 cps | 13000 cps | 14000 cps | 66,6% | 79,48% |

As a result, the examples clearly show that, when vinyl trimethoxy silane was added after 90% of the monomer has been fed, the stability of the latexes were significantly improved in inventive example 1 and inventive example 2 as shown with the percantages of 7,3% and 1,02%, respectively.

## Claims

1. A process for producing a silane modified vinyl ester latex adhesive composition by free radically initiated aqueous emulsion polymerization of vinyl ester monomers in the presence of at least one dispersant and at least one free radical initiator, providing a silane modified vinyl ester latex adhesive composition, comprising, based on the total amount of monomers,
a. from 50 to 99% by weight of vinyl esters of C2-C12-carboxylic acids and from 0,05 to 5% of vinyl silanes capable of copolymerizing with the said vinyl esters,
b. from 0,75% to 25% by weight of at least one polyvinyl alcohol with a degree of hydrolysis of between 70% and 99%,
c. from 0,05% to 5% by weight of at least one crosslinking agent,
d. from 1% to 20% by weight, of at least one Lewis acid metal salt,
wherein the vinyl silane monomer is added into the reaction medium after at least 50% by weight of the total amount of vinyl esters of C2-C12-carboxylic acids has been fed into the reaction medium and before the monomer reduction stage is reached.

2. The process of claim 1 wherein at least 50% of vinyl esters of C2-C12 carboxylic acids is vinyl acetate monomer.

3. The process of claim 1 or 2 wherein vinyl silane monomer addition into the reaction medium starts after at least %70 by weight of the total amount of vinyl ester monomers of C2-C12 carboxylic acids are fed into the reaction medium and continues until the end of monomer feed.

4. The process of claim 1 or 2 wherein vinyl silane addition into the reaction medium starts after at least %50 by weight of the total amount of vinyl esters of C2-C12 carboxylic acids are fed into the reaction medium and continues after the end of vinyl ester monomer feed such that vinyl silane addition continues for up to 15 minutes after all the vinyl esters of C2-C12 carboxylic acids has been fed into the reaction medium.

5. The process of claim 1 or 2 wherein vinyl silane monomer is added after 90% by weight of vinyl esters of C2-C12-carboxylic acids has been fed into the reaction medium and before the monomer reduction stage is reached.

6. The process of claim 1 or 2, wherein the vinyl silane is added to the polymerization medium such that all the vinyl silane is polymerized after more than half of the vinyl esters of C2-C12 carboxylic acids have been polymerized.

7. The process of anyone of claims 1, 2, 5 or 6 wherein the vinyl silane addition into the polymerization medium is made as a shot addition such that all the vinyl silane is added in less than 5 minutes.

8. The process of anyone of claims 1 to 7 wherein the vinyl silane monomer is vinyl trimethoxy silane.

9. The process of anyone of claims 1 to 8, wherein the polyvinyl alcohol is a blend of, based on the total amount of monomers,
a. from 0,5% to 15% by weight of polyvinyl alcohol with a degree of hydrolysis of between 90% and 99%,
b. from 0,25% to 10% by weight of polyvinyl alcohol with a degree of hydrolysis of between 70 and 89%.

10. The process of claim 9 wherein the ratio of the amount of polyvinyl alcohol with the higher degree of hydrolysis to the lower degree of hydrolysis is 10 to 15 times.

11. The process of anyone of claims 1 to 10 wherein the ratio between the crosslinking agent amount to the vinyl silane amount is 2 to 5 times.

12. The process of anyone of claims 1 to 11, wherein a coalescing agent from 0,15% to 15% is added to the silane modified vinyl ester latex adhesive composition in order to adjust the minimum film formation temperature.

13. A silane modified vinyl ester latex adhesive composition obtainable by the process of anyone of claims 1-12.

14. Use of the silane modified vinyl ester latex adhesive composition as defined in claim 13 as a D3 type wood adhesive.

## Patentansprüche

1. Ein Prozess zur Herstellung der Silan-modifizierten Vinylester Latex Klebstoffzusammensetzung durch frei radikalisch initiierte wässrigere Emulsionspolimerisation der Vinylester-Monomeren in der Gegenwart eines mindestens Dispergiersmittel und eines mindestens Radikalinitiator, bereitstellend ein Silan modifizierte-Vinylester Latex Klebstoffzusammensetzung, umfassend, basierend auf der totalen Betrag der Monomere,
a. von 50 bis 99% nach Gewicht der Vinylesteren der C2-C12-Carbonsäure und von 0,05 bis 5% des Vinyl-Silan, die in der Lage sind, mit den genannten Vinylesteren zu copolymerisieren.
b. von 0,75% bis 25% nach Gewicht von mindestens einem Polyvinyl-Alkohol mit einem Hydrolysegrad zwischen 70% und 99%,
c. von 0,05% bis 5% nach Gewicht von mindestens einem vernetzenden Mittel.
d. von 1% bis 20% nach Gewicht, zu mindestens eines Lewissäurenmetalsalzes, wobei der Vinyl-Silan Monomer in das Reaktionsmittel nach zu mindestens 50% nach Gewicht der gesamten Menge der Vinylestere der C2-C12- Carbonsäure dem Reaktionsmedium dosiert wurden hinzugefügt wird und bevor die Monomer-Reduzierungsphase erreicht wird.

2. Der Prozess nach Anspruch 1, wobei mindestens 50% der Vinylestere der C2-C12 Carbonsäure Vinylazetatmonomer ist.

3. Der Prozess nach Ansprüche 1 oder 2, wobei die Hinzufügung des Vinyl-Silanmonomers in das Reaktionsmedium nach mindestens %70 nach Gewicht der gesamten Menge der Vinylestermonomere der C2-C12 Carbonsäure dosiert wurden anfängt und bis zum Ende der Monomerhinzufügung dauert.

4. Der Prozess nach Ansprüche 1 oder 2, wobei Hinzufügung des Vinyl-Silans in das Reaktionsmedium nach mindestens 50% nach Gewicht der gesamten Menge der Vinylestere der C2-C12 Carbonsäure zugefügt wird, anfängt und nach dem Ende der Hinzufügung der Vinylestermonomere weitergeführt wird so, dass die Vinyl-Silan Hinzufügung nachdem die Vinylestere der C2-C12 Carbonsäure dem Reaktionsmedium hinzugefügt werden noch bis zu 15 Minuten dauert.

5. Der Prozess nach Ansprüche 1 oder 2, wobei der Vinyl-Silanmonomer in das Reaktionsmedium nach mindestens 90% nach Gewicht der gesamten Menge der Vinylestermonomere der C2-C12 Carbonsäure dosiert wurden und bevor die Monomer-Reduzierungsphase erreicht wird hinzugefügt wird.

6. Der Prozess nach Ansprüche 1 oder 2, wobei das Vinyl-Silan in das Reaktionsmedium hinzugefügt wird so, dass alle Vinylsilan nachdem mehr als die Hälfte der Vinylestere der C2-C12 Carbonsäure polymerisiert sind, polymerisiert werden.

7. Der Prozess nach Ansprüche 1, 2, 5 oder 6, wobei die Hinzufügung des Vinylsilan in das Polymerisationsmedium als eine Schusshinzufügung gemacht wird so, dass alle Vinylsilan in weniger als 5 Minuten hinzugefügt werden.

8. Der Prozess nach einem der Ansprüche 1 bis 7, wobei das Vinylsilanmonomer Vinyltrimethoxysilan ist.

9. Der Prozess nach einem der Ansprüche 1 bis 8, wobei der Polyvinylalkohol eine Mischung von, basierend auf der gesamten Menge der Monomere,
a. von 0,5% bis 15% nach Gewicht des Polyvinylalkohols mit einem Hydrolysegrad zwischen 90% und 99%,
b. von 0,25% bis 10% nach Gewicht des Polyvinylalkohols mit einem Hydrolysegrad zwischen 70% und 89%.

10. Der Prozess nach Anspruch 9, wobei das Verhältnis der Menge des Polyvinylalkohols mit höherem Hydrolysegrad zum niedrigeren Hydrolysegrad 10 bis 15-mal ist.

11. Der Prozess nach einem der Ansprüche 1 bis 10, wobei das Verhältnis zwischen der Menge des Vernetzungsagent und der Menge des Vinylsilan 2-bis 5-mal ist.

12. Der Prozess nach einem der Ansprüche 1 bis 11, wobei ein Koaleszenzmittel von 0,15% bis 15% zum Silan modifizierten Vinylester Latteks Klebstoffzusammensetzung hinzugefügt wird, um die minimale Filmbildungstemperatur anzupassen.

13. Ein Silan modifizierte Vinylester Latteks Klebstoffzusammensetzung herstellbar durch den Prozess nach einem der Ansprüche 1 bis 12.

14. Nutzung des Silan modifizierten Vinylester Latteks Klebstoffzusammensetzung wie in Anspruch 13 beschrieben als D3 Typ Holzkleber.

## Revendications

1. Un procédé pour produire une composition d'adhésive latex d'ester vinylique modifié par des silanes par polymérisation radicalaire en émulsion aqueuse de monomères d'ester vinyliques en présence d'au moins un dispersant et d'au moins un initiateur de radicaux libres, fournissant une composition d'adhésive latex d'ester vinylique modifié par des silanes, comprenant, basé sur la quantité totale de monomères,
a. de 50 à 99% en poids d'esters vinyliques d'acides carboxyliques en C2-C12 et de 0,05 à 5% de vinylsilanes capables de copolymériser avec lesdits esters vinyliques,
b. de 0,75% à 25% en poids d'au moins un alcool polyvinylique avec un degré d'hydrolyse compris entre 70% et 99%,
c. de 0,05% à 5% en poids d'au moins un agent de réticulation,
d. de 1% à 20% en poids, d'au moins un sel d'un métal d'acide de Lewis, dans lequel le monomère de vinylsilane est ajouté dans le milieu réactionnel après au moins 50% en poids de la quantité totale d'esters vinyliques des acides carboxyliques en C2-C12 a été introduit dans le milieu réactionnel et avant que l'étape de réduction des monomères ne soit atteinte.

2. Le procédé de la revendication 1 dans lequel au moins 50% des esters vinyliques des acides carboxyliques en C2-C12 sont des monomères d'acétate vinyliques.

3. Le procédé selon la revendication 1 ou 2, dans lequel l'ajout du monomère de vinylsilane dans le milieu réactionnel commence après qu'au moins 70% en poids de la quantité totale des monomères d'esters vinyliques d'acides carboxyliques en C2-C12 sont introduits dans le milieu réactionnel et se continue jusqu'à la fin de la charge des monomères

4. Le procédé selon la revendication 1 ou 2, dans lequel l'ajout du vinylsilane dans le milieu réactionnel commence après qu'au moins 50% en poids de la quantité totale d'esters vinyliques d'acides carboxyliques en C2-C12 sont introduits dans le milieu réactionnel et se continue après la fin de la charge des monomères d'ester vinylique de telle sorte que l'ajout du vinylsilane se continue jusqu'à 15 minutes après que tous les esters vinyliques des acides carboxyliques en C2-C12 ont été introduits dans le milieu réactionnel.

5. Le procédé selon la revendication 1 ou 2, dans lequel le monomère de vinylsilane est ajouté après que 90% en poids d'esters vinyliques d'acides carboxyliques en C2-C12 ont été introduits dans le milieu réactionnel et avant que l'étape de réduction des monomères ne soit atteinte.

6. Le procédé selon la revendication 1 ou 2, dans lequel le vinylsilane est ajouté dans le milieu de polymérisation de telle sorte que tout le vinylsilane est polymérisé après que plus de la moitié des esters vinyliques des acides carboxyliques en C2-C12 ont été polymérisés.

7. Le procédé selon l'une quelconque des revendications 1, 2, 5 ou 6, dans lequel l'ajout du vinylsilane dans le milieu de polymérisation est effectuée comme l'ajout d'un coup de sorte que tout le vinylsilane est ajouté en moins de 5 minutes.

8. Le procédé selon l'une quelconque des revendications 1 à 7, dans lequel le monomère de vinylsilane est le vinyl triméthoxy-silane.

9. Le procédé selon l'une quelconque des revendications 1 à 8, dans lequel, basé sur la quantité totale de monomères, l'alcool polyvinylique est un mélange,
a. de 0,5% à 15% en poids d'au moins un alcool polyvinylique avec un degré d'hydrolyse compris entre 90% et 99%,
b. de 0,25% à 10% en poids d'au moins un alcool polyvinylique avec un degré d'hydrolyse compris entre 89% et 99%.

10. Le procédé selon la revendication 9, dans lequel le rapport de la quantité d'alcool polyvinylique avec le degré d'hydrolyse supérieur au degré d'hydrolyse inférieur, est 10 à 15 fois.

11. Le procédé selon l'une quelconque des revendications 1 à 10, dans lequel le rapport entre la quantité d'agent de réticulation et la quantité de vinylsilane est 2 à 5 fois.

12. Le procédé selon l'une quelconque des revendications 1 à 11, dans lequel un agent coalescent de 0,15% à 15% est ajouté à la composition d'adhésive latex d'ester vinylique modifié par des silanes afin d'ajuster la température minimale de formation de film.

13. Une composition d'adhésive latex d'ester vinylique modifié par des silanes pouvant être obtenue par le procédé selon l'une quelconque des revendications 1-12.

14. Utilisation de la composition d'adhésive latex d'ester vinylique modifié par des silanes telle que défini dans la revendication 13 comme la colle à bois de type D3.
